# EUROPÄISCHE PATENTANMELDUNG

(11) **EP 1 139 644 A2**
(43) Veröffentlichungstag der Anmeldung: **04.10.2001**
(21) Anmeldenummer: 01100674.9
(22) Anmeldetag: 11.01.2001
(51) Int. Cl.: H04M 7/00

(54) **Rechnergesteuertes Vermittlungssystem**

(30) Priorität: 30.03.2000 DE 10015937
(71) Anmelder: Tenovis GmbH & Co. KG, 60362 Frankfurt am Main (DE)
(72) Erfinder: Arndgen, Hans-Jürgen, 65439 Floersheim (DE)
(74) Vertreter: Bohnenberger, Johannes, Dr.

(57) **Zusammenfassung**

Die Erfindung betrifft ein Verfahren für den Zugriff auf Konfigurations- und Benutzerdaten in einem Speicher (13) eines Vermittlungssystems (11) für Telefon- und Datenkommunikation. Der Zugriff erfolgt dabei in einer Markup-Sprache, insbesondere gemäß dem Wireless Application Protocol (WAP). Hierdurch ist es möglich, auch von mobilen Endgeräten (2) aus über ein WAP-Gateway (3) und einen Web-Server (6) auf das Vermittlungssystem (11) zuzugreifen.

## Beschreibung

### Technisches Gebiet

Die Erfindung betrifft ein rechnergesteuertes Vermittlungssystem für Telefon- und Datenkommunikation, enthaltend einen Speicher für Konfigurationsparameter und Benutzerdaten sowie eine Schnittstelle, welche den Zugriff auf den Speicher ermöglicht.

### Stand der Technik

Rechnergesteuerte Vermittlungssysteme (PABX: "Private Automatic Branch Exchange", d.h. programmgesteuerte Nebenstellenanlage für die lokale - analoge oder digitale - Telefon- und Datenkommunikation) für Telefonie und Datenverkehr nach dem Stand der Technik verfügen in der Regel über Komponenten, die den Anschluss sowohl von analogen als auch von digitalen Endgeräten (Terminals) ermöglichen. Aufgrund der üblichen leistungsfähigen Rechnerarchitektur eines solchen Vermittlungssystems können über die Endgeräte vielfältige Leistungsmerkmale genutzt werden. Diese betreffen insbesondere den Bereich des Telefonverkehrs über analoge und digitale (ISDN) Amtsanschlüsse und enthalten beispielsweise Varianten der Zustellung ankommender Anrufe zu den angeschlossenen Endgeräten des Vermittlungssystems (Sammelanschlüsse, Nachtschaltungen, Rufweiterleitungen, Rufdopplungen, Abfragestellen etc.), das Führen von Anruflisten, in denen die Telefonnummern von Anrufern enthalten sind, deren Anruf nicht entgegengenommen werden konnte, sowie Telefonbuchfunktionen und Notizbuchfunktionen. Typisch für derartige Anwendungen ist es, dass zu ihrer Realisierung in dem Vermittlungssystem ein spezielles Programm (Software) abgearbeitet wird, von welchem im allgemeinen auch zugeordnete Parameter (Daten) benutzt werden, die in einem Speicher des Vermittlungssystems für das jeweilige Leistungsmerkmal eindeutig adressierbar abgelegt sind. Die Verwaltung dieser Daten erfolgt ebenfalls durch ein dafür eingerichtetes Programmstück in der Software.

Für die Benutzung und Konfiguration der oben genannten Leistungsmerkmale ist es erforderlich, die zugehörigen Parameter anzuzeigen, zu ändern und/oder die entsprechende Funktion zu aktivieren beziehungsweise zu deaktivieren. Der hierfür erforderliche Zugriff auf den Speicher der Daten erfolgt in der Regel über die Endgeräte des Vermittlungssystems, wobei im allgemeinen ein proprietäres Übertragungsprotokoll benutzt wird. Dieses basiert typischerweise auf Zeichen nach dem Mehrfrequenzverfahren (MFV) oder auf ISDN-Meldungen. Über die Zugriffsmöglichkeit kann ein Teilnehmer an einem Endgerät zum Beispiel auf die Anrufliste der Anrufe, die er nicht beantwortet hat, zugreifen. Für den Zugriff benutzt der Teilnehmer dabei eine entsprechende Prozedur an seinem Terminal, zum Beispiel die Eingabe einer definierten Ziffernfolge über die Tastatur. Die Prozedur erlaubt ihm zum Beispiel, die Einträge der Anrufliste anzuzeigen, zu löschen oder auch den jeweiligen Anrufer zurückzurufen.

### Darstellung der Erfindung, Aufgabe, Lösung, Vorteile

Aufgabe der vorliegenden Erfindung war es, ein rechnergesteuertes Vermittlungssystem für die Telefon- und/oder Datenkommunikation so zu verbessern, dass der Zugriff auf den Speicher des Vermittlungssystems flexibler erfolgen kann.

Diese Aufgabe wird durch ein Vermittlungssystem nach Anspruch 1 gelöst. Vorteilhafte Ausgestaltungen sind in den Unteransprüchen angegeben.

Das rechnergesteuerte Vermittlungssystem für Telefonie und Datenverkehr enthält demnach einen Speicher für Konfigurationsparameter und für Teilnehmerdaten sowie eine Schnittstelle, welche den Zugriff auf den Speicher ermöglicht. Das Vermittlungssystem ist dadurch gekennzeichnet, dass die Schnittstelle so eingerichtet ist, dass sie zur externen Seite hin, also der dem Speicher abgewandten Seite hin, eine Kommunikation in einer sogenannten Markup-Sprache ermöglicht. Eine Markup-Sprache ist eine Seitenbeschreibungssprache, bei welcher Formatierungsinformationen und sonstige Steuerinformationen mit Hilfe von Markierungen (Tags) im Text vorgenommen werden. Die Markierungen werden dabei in der Regel durch alphanumerische Zeichen dargestellt, welche von Erkennungszeichen (typischerweise "<" und ">") eingeschlossen werden, um von einem Verarbeitungsprogramm vom restlichen Text unterschieden werden zu können. Der Vorteil einer Markup-Sprache besteht darin, dass die komplette Information in alphanumerischen Zeichen beziehungsweise in ASCII-Zeichen codiert werden kann und dennoch komplexe Formatierungen systemunabhängig übermittelt werden können. Es gibt verschiedene Definitionen für Markup-Sprachen, welche in der Regel auf der SGML (Standard Generalized Markup Language) basieren und deren vielleicht bekanntestes Beispiel HTML (Hypertext Markup Language) aus dem World Wide Web darstellt.

Durch die erfindungsgemäße derartige Anpassung der Schnittstelle, dass diese den Zugriff auf den Datenspeicher über eine Markup-Sprache ermöglicht, wird eine große Flexibilität und Systemunabhängigkeit dieses Zugriffs erreicht. Da Markup-Sprachen in der Regel ausschließlich aus alphanumerischen Zeichen gebildet werden, ist die Übertragung von Information in dieser Sprache auf einer breiten Palette von technischen Kommunikationssystemen möglich. Dies erlaubt es, dass der Zugriff auf den Speicher des Vermittlungssystems nicht nur über an das System angeschlossene Endgeräte mit sehr speziellen, proprietären Kommunikationsprotokollen erfolgen kann, sondern dass aus einer großen Anzahl von Kommunikationseinrichtungen ausgewählt werden kann.

Wenn die eingesetzte Markup-Sprache speziell für die drahtlose Kommunikation geeignet ist, kann der Zugriff auf den Speicher des Vermittlungssystems insbesondere auch von Funknetzendgeräten (Mobiltelefonen) erfolgen. Eine Markup-Sprache eignet sich dann für die drahtlose Kommunikation, wenn sie deren Besonderheiten wie zum Beispiel geringe Bandbreite der Übertragung und Verzögerungen bei der Übertragung berücksichtigt. Weiterhin sollte die Markup-Sprache vorzugsweise für die Darstellung auf Endgeräten mit kleinen Displays, geringer Prozessorleistung und/oder kleinem Speicher geeignet sein, um begrenzte Anzeigemöglichkeiten sowie Datenverarbeitungsmöglichkeiten beim empfangenden Endgerät zu berücksichtigen. Zur Anbindung von Mobiltelefonen, Palmtops, Organizern und ähnlichen Geräten ist die Definition einer solchen Sprache unter der Abkürzung WML (Wireless Markup Language) bekannt. Die Standardisierung und weitgehende Vereinheitlichung einer solchen Sprache im Sinne eines WAP (Wireless Application Protocol) stellt dabei sicher, dass der Zugriff auf das Vermittlungssystem von allen Endgeräten möglich ist, die für eine Kommunikation in einer solchen Standardsprache eingerichtet sind. Hierzu werden in zunehmendem Maße Mobiltelefone gehören.

Bei einer anderen Weiterbildung der Erfindung ist die Schnittstelle vorzugsweise an einen Internet-Server angekoppelt. Die Verwendung einer Markup-Sprache ist insbesondere zur Kommunikation über das Internet geeignet, da sie größtmögliche Unabhängigkeit von den an der Übertragung jeweils beteiligten proprietären Computersystemen bietet. Durch die Ankopplung der Schnittstelle des Vermittlungssystems an das Internet kann somit erreicht werden, dass ein Benutzer das leistungsfähige und globale Kommunikationsnetz des Internet für einen Zugriff auf den Speicher des Vermittlungssystems nutzen kann.

Der Internet-Server, an welchem die Schnittstelle angekoppelt ist, weist dabei vorzugsweise Mittel für eine drahtlose Kommunikation mit Endgeräten auf. Auf diese Weise wird gewährleistet, dass der Benutzer quasi von jedem Ort aus einen Zugriff auf das Vermittlungssystem hat.

### Kurze Beschreibung der Zeichnungen

Im folgenden wird die Erfindung mit Hilfe der Figuren beispielhaft erläutert. Es zeigen:
- Fig. 1: schematisch ein Vermittlungssystem, welches an einen Web Server gekoppelt ist;
- Fig. 2: ein Vermittlungssystem, welches an einen WAP Server gekoppelt ist.

### Bester Weg zur Ausführung der Erfindung

Die Erfindung geht aus von einem rechnergesteuerten Vermittlungssystem (PABX; auch PBX, CBX (Computerized Branch Exchange) oder PINX (Private Integrated Services Network Exchanges) genannt) für Telefonie und Datenverkehr 11 mit PABX-Funktionen 12, welche auf einen Datenspeicher 13 zugreifen. Bei den Funktionen 12 kann es sich beliebige Funktionen handeln, die die PABX den Benutzern und dem Wartungspersonal bzw. Administrator bereitstellt und die durch Parameter, die im Datenspeicher 13 liegen, in ihrer Ausprägung und/oder Wirkungsweise verändert werden können. Hierzu gehören zum Beispiel Anruflisten oder eine Telefonbuchfunktion ebenso wie Rufumleitungsziele oder das Ein-/Ausschalten von "Ruhe vor dem Telefon". Die Daten 13 stellen in diesem Falle die Nummern der in der Anrufliste gespeicherten Anrufe beziehungsweise die im Telefonbuch gespeicherten Einträge dar. An das Vermittlungssystem 11 sind lokale Endgeräte 14 angeschlossen, bei welchen es sich zum Beispiel um analoge oder digitale Telefonapparate handeln kann. Über derartige Endgeräte 14 ist es in der Regel mit einem proprietären Protokoll möglich, auf den Datenspeicher 13 zuzugreifen und die darin enthaltenen Daten zu lesen und gegebenenfalls zu verändern.

Mit der erfindungsgemäßen Erweiterung des Vermittlungssystems 11 soll es möglich sein, die Leistungsmerkmale des Vermittlungssystems PABX beziehungsweise eines PABX-Netzwerkes in Hinblick auf den Zugriff auf die zugeordneten Parameter im Speicher 13 lokal sowie aus der Ferne flexibel zu steuern und zu nutzen. Auf diese Weise können durch Teilnehmer individuelle Daten, Kundendaten und/oder Konfigurationsdaten, die sich auf eine PABX und ein PABX-Netzwerk beziehen, eingestellt und genutzt werden.

Dieses Ziel wird dadurch erreicht, dass das Vermittlungssystem 11 eine Schnittstelle 10 für einen Datenzugriff auf den Speicher 13 enthält, wobei diese Schnittstelle 10 so eingerichtet ist, dass sie nach außen hin über die Verbindung 9 eine Kommunikation in einer Markup-Sprache erlaubt. Hierdurch wird es möglich, auf den Speicher 13 durch eine weitverbreitete, standardisierte und auf zahlreichen Datenverarbeitungssystemen laufende Markup-Sprache zuzugreifen.

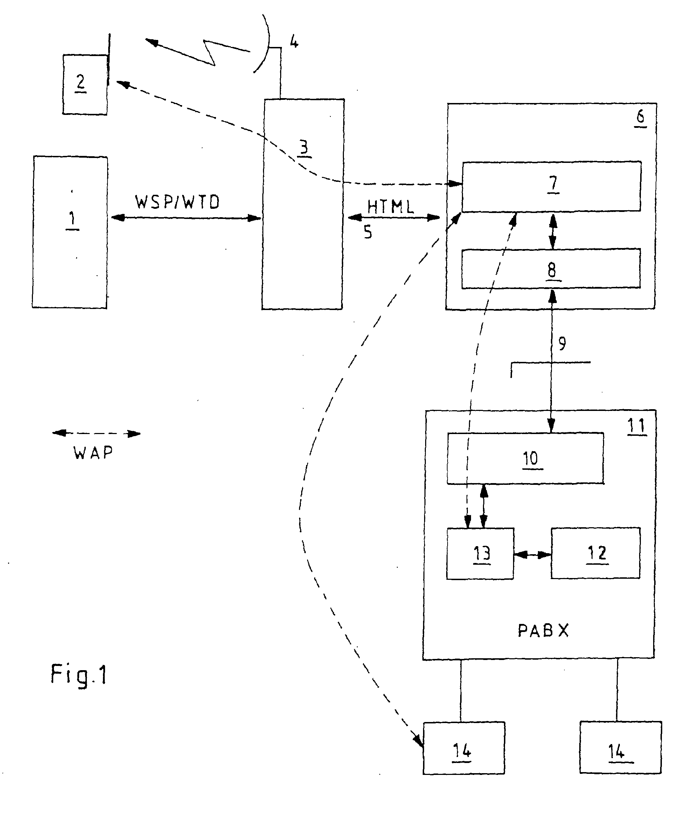

In dem in Figur 1 dargestellten Beispiel ist an die Schnittstelle 9 ein Internet-Server beziehungsweise Web-Server 6 über eine Schnittstelle 8 angeschlossen. Innerhalb des Web-Servers 6 erfolgt die Kommunikation ausgehend von Seiten 7 in der Markup-Sprache. Dabei handelt es sich vorzugsweise um WAP-Seiten mit einem WML-Script. Die Verwendung von WML hat den Vorteil, dass dann die Information dann insbesondere für einen Zugriff von mobilen Endgeräten 2 geeignet ist. Zur Ermöglichung einer derartigen Kommunikation ist der Web-Server 6 über eine Verbindungsleitung 5, auf der zum Beispiel mit dem http-Protokoll kommuniziert wird, mit einem WAP-Gateway 3 verbunden. Dieses führt über eine Funkantenne 4 die Kommunikation mit dem Endgerät 2, zum Beispiel einem Mobiltelefon aus. Daneben kann das WAP-Gateway 3 auch mit einem Client 1 über eine Leitung und das WSP/WTD-Protokoll (Wireless Session Protocol) verbunden sein.

Weiterhin können auch die lokalen Endgeräte 14 am Vermittlungs-system 11 über den Web-Server 6 auf den Speicher 13 zugreifen. Ein proprietäres Protokoll kann dann entfallen. Die WAP-Datenzugriffe sind in der Abbildung durch gestrichelte Verbindungen hervorgehoben. Einzelheiten zu dem WAP-Standard können den Artikeln "Schmalband-Surfen" von Dusan Zivadinovic (c't 22/99) sowie "Das Handy spricht Web" von Jo Bager (c't 22/99) oder unter der Internetadresse http://www.wapforum.org entnommen werden.

Durch das in Figur 1 dargestellte System wird ein Teilnehmer der PABX 11 beziehungsweise eines PABX-Netzwerks in die Lage versetzt, mit einem WAP-fähigen Endgerät 2 oder 1 Leistungsmerkmale des PABX Vermittlungssystems beziehungsweise des PABX-Netzwerks durch lokalen Zugriff (bei einem WAP-fähigen DECT-Handset oder einem ähnlichen lokalen Funknetzendgerät sowie einem drahtgebundenen WAP-fähigen

Endgerät) oder durch Zugriff aus der Ferne (über ein WAP-fähiges Funknetzendgerät 2, zum Beispiel GSM, oder ein drahtgebundenes WAP-fähiges Endgerät 1) auf die Daten 13 zu steuern und zu nutzen.

Als Endgerät kann beispielsweise jedes WAP/WML-fähige Endgerät genutzt werden, mit dem es möglich ist, über öffentliche, private oder lokale Netze oder Zugänge einen WAP- beziehungsweise WTA-Server (WTA = Wireless Telephony Application) zu erreichen. Bei dem zu erreichenden Server handelt es sich in dargestellten Fall um einen WAP-Server der PABX 11 oder des PABX-Netzwerks.

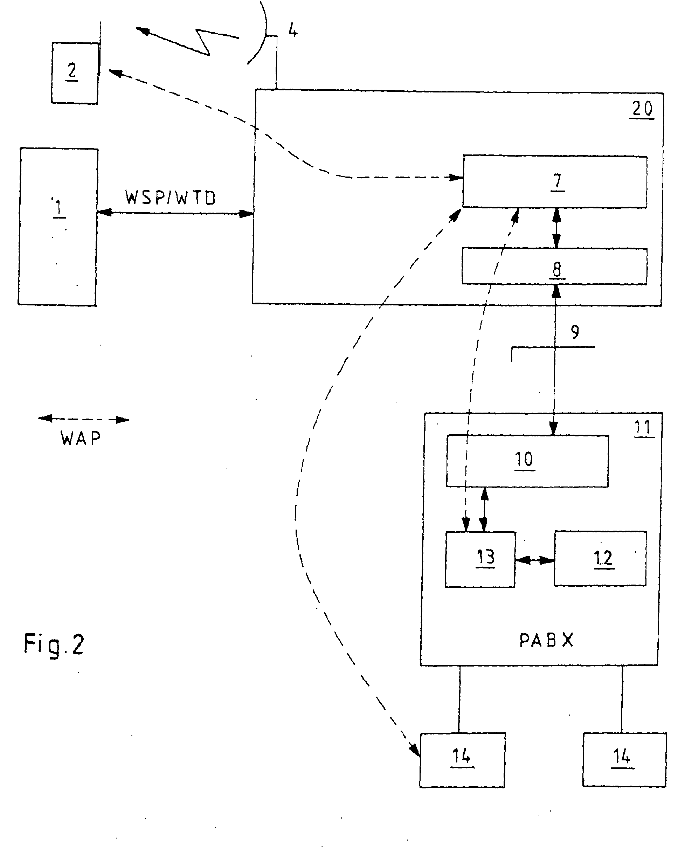

Die in Figur 2 dargestellte Konfiguration unterscheidet sich von derjenigen aus Figur 1 dahingehend, dass anstelle des Web-Servers 6 und des WAP-Gateways 3 ein WAP-Application Server 20 vorhanden ist, also ein unmittelbar und ausschließlich auf das WAP abgestimmter Server. Eine Umwandlung zum World Wide Web Standard HTML entfällt hierbei.

In beiden in den Figuren dargestellten Anordnungen kann der Zugriff auf den Datenspeicher 13 von verschiedenen Personenkreisen genutzt werden. Hierbei kann es sich zum einen um jeden der Teilnehmer am Vermittlungssystem PABX 11 handeln, die den Zugriff zur Abfrage und Änderung teilnehmerindividueller Daten und Einstellungen (zum Beispiel Anrufliste, Rufumleitung, individuelles Telefonbuch) nutzen. Weiterhin kann jeder der Teilnehmer allgemeine Daten und Einstellungen abfragen (zum Beispiel das allgemeine PABX-Telefonbuch). Des weiteren kann ein Administrator für das PABX Vermittlungssystem 11 beziehungsweise das PABX-Netzwerk zur Abfrage und Änderung teilnehmerindividueller Daten und Einstellungen sowie zur Abfrage und Änderung allgemeiner Daten und Einstellungen (zum Beispiel Teilnehmerberechtigung, Ändern des allgemeinen Telefonbuchs) zugreifen. Schließlich kann auch Service- und Wartungspersonal des Herstellers oder Betreibers des Vermittlungs-systems 11 zur Abfrage und Änderung aller Daten einschließlich der Konfigurations- und Servicedaten auf den Speicher 13 zugreifen.

Die Zugriffsrechte für die unterschiedlichen Benutzer oder Benutzerklassen können im Vermittlungssystem 11 oder im WAP-Server 20 beziehungsweise Web-Server 6 geregelt werden.

Bei dem erfindungsgemäßen Verfahren baut das WAP/WML-fähige Endgerät 1 oder 2 über einen Zugang zu einem öffentlichen oder privaten Provider eine Verbindung zu einem WAP- beziehungsweise WAT-Server des PABX Vermittlungssystems beziehungsweise PABX-Netzwerks auf. Das Endgerät ruft dann über diese Verbindung die WML-Seiten vom Server ab. Über WML-Eingabeelemente wie Eingabe- und Optionsfelder sowie Auswahllisten, über das WML-Ereignis- und Zustandsmodell sowie über WML-Scripts kann der Benutzer mit dem Server kommunizieren und somit Daten abfragen und/oder manipulieren. Der Server wiederum hat Zugriff auf den Datenspeicher 13 der PABX beziehungsweise des PABX-Netzwerks. Somit ist er in der Lage, dem Benutzer bei Abfragen die entsprechenden PABX-Daten zu liefern und im Fall von Änderungen die entsprechenden Daten zu verändern. Um den Server zu erreichen, kann dieser entsprechend dem World Wide Web Standard eine eigene eindeutige Adresse (URL, Uniform Resource Locator) erhalten, zum Beispiel http://wap.pabx.de/wap-server. Der WAP- beziehungsweise WAT-Server kann als separate Einrichtung oder als integraler Bestandteil des PABX Vermittlungssystems 11 realisiert sein.

Das oben erläuterte Verfahren ist aufgrund der Ankopplung an den WAP-Standard zukünftigen Entwicklungen und Versionen von WAP, WML und so weiter (zum Beispiel XML = Extensible Markup Language, WBMP = Wireless Bitmap) gegenüber flexibel.

Der Vorteil des erfindungsgemäßen Verfahrens besteht darin, dass es von jedem WAP-fähigen Endgerät ohne weitere spezielle Zusatzhardware oder Software genutzt werden kann. In der Regel handelt es sich bei diesen Endgeräten um mobile Endgeräte wie GSM-Handys oder Organizer. Bei Änderungen in der Software des PABX Vermittlungssystems 11 und dem PABX-Management brauchen im Endgerät selbst keinerlei Änderungen oder Anpassungen vorgenommen zu werden.

Wenn alle an dem PABX Vermittlungssystem 11 angeschlossenen Endgeräte WAP/WML-fähig sind, kann das Management und die Bedienung des PABX Vermittlungssystems auch ausschließlich WAP/WML-basiert vorgenommen werden. In diesem Falle besteht prinzipiell kein Unterschied mehr zwischen lokaler Bedienung und der Bedienung mit WAP/WML-fähigen. Endgeräten aus der Ferne. Bei digitalen Endgeräten kann das WAP, das heißt die Übertragung von WML-Seiten, im Signalisierungskanal (zum Beispiel D-Kanal) zwischen Anlage und Endgerät genutzt werden.

Mit dem Verfahren sind zum Beispiel folgende Anwendungen möglich:

Abfragen der Anrufliste eines Terminals beziehungsweise Teilnehmers des PABX Vermittlungssystems und Übermitteln der Anruflisteneinträge, so dass anschließend von diesem Endgerät aus ein gezielter Rückruf getätigt werden kann. Bei entsprechend ausgerüsteten Endgeräten können die übermittelten Informationen oder Teile davon selektiert und an die entsprechenden Stellen kopiert beziehungsweise übertragen werden. Hierbei kann es sich zum Beispiel um das Telefonbuch, die Anrufliste, den Wahlspeicher und so weiter handeln. Dies gilt für alle vom Endgerät empfangenen Informationen.

Eine weitere Anwendung ist die Abfrage des persönlichen Telefonbuchs des Teilnehmers und/oder des allgemeinen Telefonbuchs des PABX Vermittlungssystems oder eines PABX-Netzwerks und das Übermitteln der Rufnummer beziehungsweise des Namens an das ferne Endgerät, so dass anschließend von diesem Endgerät aus der gewünschte Teilnehmer angerufen werden kann.

Weiterhin kann die Abfrage von persönlichen und/oder allgemeinen Einstellungen (Parameter/Daten) des PABX Vermittlungssystems beziehungsweise des PABX-Netzwerks und die Übermittlung der Daten an das ferne Endgerät erfolgen (zum Beispiel Abfrage der Einstellungen für die Rufumleitung oder andere Dienste). Die neuen persönlichen und/oder allgemeinen Einstellungen können nach deren Änderung, zum Beispiel einer Änderung aus der Ferne, an das ferne Endgerät übermittelt werden.

Eine andere Anwendung besteht in der Möglichkeit, mit dem geschilderten Verfahren in dem PABX Vermittlungssystem für ein angeschlossenes Terminal je nach Belieben Rufumleitungsziele aus der Ferne einzutragen beziehungsweise zu aktivieren/deaktivieren.

Zur Gewährleistung der vollständigen oben genannten Funktionalität verfügt das PABX Vermittlungssystem 11 über folgende Einrichtungen:
- Datenspeicher 13 für Parameter und Daten des Terminals beziehungsweise des Teilnehmers, für allgemeine PABX-Daten und für Service- und Wartungsdaten;
- WAP- beziehungsweise WTA-Server 6, 20 mit Zugriff auf die oben genannten Daten;
- Programmteil für den Zugriff und die Manipulation im Datenspeicher 13 der PABX 11;
- Einrichtung zur Regelung der Zugriffsberechtigung(en) der einzelnen Benutzer (zum Beispiel Teilnehmer) beziehungsweise der Benutzerklassen;
- Anschluss zu einem öffentlichen oder privaten Provider zur Übertragung der WML-Seiten für die Kommunikation mit den fernen Endgeräten 1, 2;
- Kommunikationssystem zur Übertragung der WML-Seiten für die Kommunikation mit den lokalen Endgeräten 14;
- Proprietäres Übertragungsprotokoll zur Steuerung des WML-basierten Nachrichtenaustausches zwischen Endgerät und Server, wobei das Übertragungsprotokoll zum Beispiel enthält: Identifikation des Anrufers, Passwort des Anrufers, Kennzeichnung des Leistungsmerkmals, auf dessen Daten zugegriffen werden soll, Kennzeichnung der Daten, auf die zugegriffen werden soll; Kennzeichnung des Aktion, die mit den Daten geschehen soll; Erfolgs/Misserfolgsindikation.

### Bezugszeichenliste

- 1: Client / mobile Endgeräte
- 2: mobile Endgeräte
- 3: WAP-Gateway
- 4: Funkantenne
- 5: Verbindungsleitung
- 6: Internet-Server / Web-Server
- 8: Schnittstelle
- 9: Verbindung / Schnittstelle
- 10: Schnittstelle
- 11: Vermittlungssystem / PABX
- 12: PABX-Funktionen
- 13: Datenspeicher
- 14: lokale Endgeräte
- 20: WAP-Applicator Server

## Patentansprüche

1. Rechnergesteuertes Vermittlungssystem (11) für Telefon- und Datenkommunikation, enthaltend einen Speicher (13) für Konfigurationsparameter und Benutzerdaten sowie eine Schnittstelle (10), welche den Zugriff auf den Speicher (13) ermöglicht,
**dadurch gekennzeichnet, dass** die Schnittstelle so eingerichtet ist, **dass** sie zur externen Seite hin eine Kommunikation in einer Markup-Sprache ermöglicht.

2. Vermittlungssystem nach Anspruch 1,
**dadurch gekennzeichnet, dass** die Markup-Sprache speziell für die drahtlose Kommunikation und/oder für die Darstellung auf Endgeräten mit kleinen Displays, geringer Prozessorleistung und/oder kleinem Speicher geeignet ist.

3. Vermittlungssystem nach Anspruch 1 oder 2,
**dadurch gekennzeichnet, dass** die Schnittstelle an einen Internet-Server (6, 20) angekoppelt ist.

4. Vermittlungssystem nach Anspruch 3,
**dadurch gekennzeichnet, dass** der Internet-Server (6, 20) Mittel (3, 4) für eine drahtlose Kommunikation mit Endgeräten (2) aufweist.
